# EUROPEAN PATENT SPECIFICATION

(11) **EP 2 353 940 B1**
(45) Date of publication and mention of the grant of the patent: **10.07.2013**
(21) Application number: 11153637.1
(22) Date of filing: 08.02.2011
(51) Int. Cl.: B60R 11/04, G08B 13/196, H05K 5/06

(54) **Housing for a vision system**
Gehäuse für ein Sichtsystem
Boîtier pour système de vision

(30) Priority: 08.02.2010 EP 10152884
(43) Date of publication of application: 10.08.2011
(73) Proprietor: Orlaco Products B.V., 3772 MN Barneveld (NL)
(72) Inventor: Antink, Berend Johan, 3772 MN, Barneveld (NL); Veenendaal, Michel, 3772 MN, Barneveld (NL)
(74) Representative: Nederlandsch Octrooibureau

(56) References cited:
- DE-A1- 10 251 661
- DE-U1-202006 017 665
- US-A1- 2001 006 218
- US-A1- 2003 053 806
- US-B1- 6 527 000

## Description

### Background

The present invention relates to a housing for accommodating a vision system therein.

Such a housing is known for instance from JP10203259 A titled "ON-VEHICLE CAMERA DEVICE". JP10203259 discloses a housing provided with an endless and transparent shield for securing excellent visual range. The shield circulates in a closed loop shape between a pair of upper and lower drums, passes the front of a lens of a camera part on the way of the circulating route and prevents soiling from sticking to the lens. A cleaner part is provided in the circulating direction of the shield and the cleaner part eliminates soiling of the shield. In the cleaner part, the shield to which soiling is stuck by passing the front of the lens is soaked in liquid stored in a liquid tank, soiling is made easy to come out and soiling is scraped off by a brush provided in liquid of the liquid tank. Next, a wiper comes into contact with the shield and liquid left in the shield is wiped away.

A drawback of the housing disclosed in JP10203259 is that the transparent shield constitutes an additional layer for the light to pass before reaching the camera. This additional layer has two sides that potentially can become filthy or dirty with a negative effect on vision, especially because the inner side of the shield is not cleaned. Moreover the housing of JP10203259 is open for passing the shield along the front of the lens. This housing being open, renders the housing a "dust and dirt collector" which is potentially in conflict with proper vision. The moving transparent shield even promotes the collection of dirt in the open housing which is also potentially in conflict with proper vision.

US 2006/0230570 Al discloses an all weather mobile video camera housing unit. The unit does not disclose how to contain a gas in the unit, let alone gas under pressure. The unit houses both the electric motor and a video camera together in one and the same housing which potentially causes contamination of the video camera and deteriorates the images acquired by the camera.

US 2003/0053806 A (closest prior art) discloses a pressurized camera housing of a surveillance camera. The housing includes a transparent dome, an upper housing shell, and an upper sealing plate: The components are separable for access to the housing interior for installation and maintenance purposes. Under circumstances, the exterior of the transparent dome will pollute, which pollution hinders the field of view of the camera.

### Summary of the invention

The invention aims to provide a housing for accommodating a vision system therein, wherein at least a drawback of such a known housing is solved or at least partially solved.

Another object of the invention is to improve a housing for accommodating a vision system therein.

Yet another object of the invention is to provide a housing for accommodating a vision system therein, wherein the housing provides an entrance window for the vision system and the housing provides a manageable entrance losses for the entrance window.

According to a first aspect of the invention this is realized with a housing for accommodating a vision system therein, the housing comprising;
- a first stationary housing part,
- a second housing part coupled with the first stationary housing part for accommodating a vision system in the housing, and wherein the second housing part comprises a transparent portion and the second housing part is moveable coupled with the first stationary housing part for cleaning the transparent portion of the second housing part.

The transparent (translucent) portion is in general an entrance window, i.e. that portion that constitutes an entrance window for the visible component of the electromagnetic spectrum. However, it will be clear that the current invention is beneficial for any entrance window for electromagnetic radiation, like infrared, that is hindered by filth and dirt.

The second housing part being moveable coupled with the first stationary housing part, advantageously enables moving of the transparent portion with respect to a cleaning device for cleaning the transparent portion of the second housing part and preventing entrance losses with respect to the vision system. Because during cleaning of the transparent portion the second housing moves with respect to the cleaning device, there is no need for a shutter or wiper blade that may move in front of the vision system, specifically in front of the camera, resulting in entrance losses and possible losses of focus. Focus and entrance efficiency are of utmost importance for visions systems in safety applications.

Moreover, since the housing itself constitutes an entrance window, any filth of dirt is remote from the vision system itself and has already a reduced effect seen from the vision system.

In an embodiment of the invention the second housing part is gastight coupled with the first stationary housing part for filling the housing with gas, preferably nitrogen, preferably for filling the housing with gas at an overpressure. The housing being gas filled, specifically being gas filled at an overpressure, prevents the presence of humidity in the housing and the ingress of humidity into the housing.

The housing according to the invention comprises a bearing assembly for gas tightly and moveably coupling the second housing part with the first stationary housing part.

In an embodiment of the invention bearing assembly comprises a slide bearing, also known as a sleeve bearing. Applying a slide bearing for the housing is beneficial since it provides excellent stability of the second housing part with respect to the first stationary housing part, which is important when housing a vision system.

In an embodiment of the invention, the slide bearing assembly comprises an upstream slide bearing bush and a downstream slide bearing bush. The upstream slide bearing bush and a downstream slide bearing bush provide an even more excellent stability. Upstream, downstream relates to the unwanted leakage of gas from the interior of the housing to the outside.

In an embodiment of the invention, the bearing assembly comprises a sealing means for maintaining the housing being gas filled at an overpressure.

In an embodiment of the invention, the sealing means is provided between the upstream slide bearing bush and the downstream slide bearing bush. This provides optimal conditions for the sealing means to seal the housing and maintain the gas under pressure.

In an embodiment the bearing assembly extends over a bearing length a along the central axis, the second housing part extends along a second housing part length b, and the ratio of b/a is such that the bearing assembly still provides stability and the housing provides the required field of view for the visions system. Specifically, the ratio of b/a is greater than 3, more specifically the ratio of b/a is about 4.5.

In an embodiment the bearing assembly has an inner diameter y, the transparent portion has in inner diameter x, and the ratio x/y is such that the bearing assembly provides low friction and the housing provides low distortion caused by the transparent portions. Specifically, the ratio x/y is greater than 1, more specifically the ratio x/y is about 1.5.

In an embodiment, the sealing means comprise a plurality of sealing lips for even better sealing action.

In an embodiment the sealing means is an x-type sealing ring.

In an embodiment of the invention, the second housing part extends around the first stationary housing part, therewith providing a compact housing and enabling a continuous cleaning process. This enables use of a drive that only needs to rotate or move in one direction, thus preventing wear or irregularities associated with turning the direction of a drive.

In an embodiment of the invention is the second housing part provided with a curvature. The second housing part provided with a curvature promotes draining of the second housing part, specifically the transparent portion thereof. Moreover, because of the curvature having no discontinuities, accumulation of dirt is prevented.

In an embodiment of the invention, the second housing part extends circumferential around the first stationary housing part. The second housing part extending circumferential promotes draining of the second housing part, independent of the position of the second housing part.

In an embodiment of the invention, the transparent portion extends circumferential around the first stationary housing part. The transparent portion extending circumferential around the first stationary housing part enables a continuous cleaning process with an improved reaction time. In this connection means cleaning without a wiper or shutter moving back and forth with respect to a vision system. The continuous cleaning process is beneficial for the reaction time of the cleaning process.

In an embodiment of the invention, the second housing part is rotatable coupled with the first stationary housing part for cleaning the transparent portion of the second housing part, therewith providing a compact housing and enabling a continuous cleaning process. The second housing part being rotatably coupled with the first stationary housing part enables moving of the second housing part with respect to the first housing part without a change in overlap of the first and second housing part, therewith the ingress of dirt into the housing is further reduced which is beneficial for the entrance efficiency of the housing. Furthermore, the second housing part being rotatably coupled with the first stationary housing part provides a more compact housing. Additionally, the second housing part being rotatably coupled with the first stationary housing part provides a more robust moving of the second housing part with respect to the first housing part, wherein the second housing is more difficult to block when compared with a the second housing part being translational coupled with the first stationary housing part or a when compared with a conventional wiper or shutter. The hamper free functioning of a housing is of utmost importance for vision systems in connection with safety applications. The robust moving, that is more difficult to block, also involves a less chance for injury of an operator.

In an embodiment of the invention, the housing comprises a cleaning device for cleaning the transparent portion of the second housing part.

In an embodiment of the invention, the housing comprises a drive for moving the second housing part with respect to the first stationary housing part for cleaning the transparent portion of the second housing part.

In an embodiment of the invention the housing comprises a filling device for enabling filling the housing with gas. The filling device is beneficial for maintaining the housing filled with gas during the product life time of the housing. The filling device may be for example a valve or a simple plug.

In an embodiment of the invention the housing comprises a heating device for preventing condensation on the transparent portion. The heating device keeps the housing temperature above a certain threshold, this is especially important in case of a gastight housing.

According to a further aspect of the invention this is realized with an assembly of a vision system accommodated in a housing according to the invention, comprising a camera system, and wherein the transparent portion extends at the camera system for constituting an entrance window therefore.

According to a further aspect of the invention this is realized with a method for cleaning the entrance window of an assembly according to the invention, comprising the step;
- moving the second housing part with respect to the first stationary housing part for cleaning the entrance window of the second housing part.

In an embodiment of the invention the method comprises the step;
- rotating the second housing part with respect to the first stationary housing part for cleaning the entrance window of the second housing part.

The invention further relates to a device comprising one or more of the characterising features described in the description and/or shown in the attached drawings.

The invention further relates to a method comprising one or more of the characterising features described in the description and/or shown in the attached drawings.

The various aspects discussed in this patent can be combined in order to provide additional advantageous advantages and/or can be the subject of divisional applications.

### Description of the drawings

The invention will be further elucidated referring to a preferred embodiment shown in the drawings wherein shown in:
Fig. 1 in exploded view a housing according to the invention;
fig. 2 in top view a cross section of the housing of fig. 1;
fig. 3 in front view a cross section of the housing of fig. 1;
fig. 4 a side view of the housing of fig. 1;
fig. 5 a cross sectional front view of a further embodiment of the housing;
fig. 6 a detail of fig. 5;
and in fig. 7 a detail of fig. 6.

### Detailed description of embodiments

In the figures, a housing 1 is shown. The housing 1 is suitable for a camera system 2, which is an example of a vision system, however other uses are conceivable. The assembly of a camera system 2 and the housing 1 is in this application also referred to with vision system 8.

The housing comprises a first stationary housing part 3. The first stationary housing part 3 is coupled to with for instance a vehicle, specifically the back of truck. The first stationary housing part 3 is mounted with the truck by means of a bracket (not shown) where on the cover 12 of the housing 1 is mounted. The first stationary housing part 3 is fixedly coupled with the cover 12 by means of fastening means 10a, 10b and the mounting plate 11 engaging the mounting face 27 of the first stationary housing part 3. The mounting face 27 of the first stationary housing part 3 is provided with a recess 29 for receiving the wiring of the camera system 2 and a socket 28 for receiving a valve 20 or a plug for filling the housing 1 with gas during maintenance or service to the housing 1.

The housing 1 comprises a second housing part 4. The second housing part 4 is movably coupled with the first stationary housing part 3. Here, the second housing part 4 is rotatable coupled with the first stationary housing part 3. The second housing part 4 is rotatable coupled with the first stationary housing part 3 by means of a bearing, here a ball bearing 13. The second housing part 4 extends around the first stationary housing part 3, specifically extends circumferential around the first stationary housing part 3, more specifically substantially encloses the first stationary housing part 3. The second housing part 4 here comprises an adjusting ring 5, a cylindrical tube 14, and a lid 15, all mutually coupled for maintaining an overpressure in the interior of the housing 1.

The housing 1 extends along the central axis 17. The housing 1 extends from a bracket 16 whereto the housing 1 is fixedly coupled. The first stationary housing part 3 substantially extends from the bracket 16 along the central axis 17. The first stationary housing part 3 substantially extends in the interior of the second housing part 4. The first stationary housing part 3 and the second housing part 4 are coupled and constitute the housing 1 for accommodating a camera module 2 therein. The camera system 2 is provided with the first stationary housing part 3. The first stationary housing part 3 and the second housing part 4 are rotatably coupled. The first stationary housing part 3 and the second housing part 4 are rotatably coupled by means of the roller bearing 13. The second housing part 4 is rotatable around the central axis 17. The first stationary housing part 3 and the second housing part 4 are coupled at their respective ends facing towards the bracket 16. The second housing part 4 encloses the first stationary housing part 3 from the bearing 13 at the respective ends of the first stationary housing part 3 and the second housing part 4 facing towards the bracket 16. The second housing part 4 may be supported by an additional bracket (not shown) at the pivot 21 for more robustly rotating of the second housing part 4 around the central axis 17.

The first stationary housing part 3 and the second housing part 4 are gastight coupled for accommodating a camera module 2 in the housing 1 at an overpressure. The first stationary housing part 3 and the second housing part 4 are gastight coupled by the bearing 13 being a gas-tight type of bearing. In an embodiment the first stationary housing part 3 and second housing part 4 are additionally coupled via a sealing ring 30. The sealing ring 30 is clamped between a first flange 31 of the first stationary housing part 3 and a second flange 32 of the second housing part 4 for further improving the gastight coupling of the first stationary housing part 3 and the second housing part 4. The bearing 13 and the sealing ring 30 do here at least partly constitute a bearing assembly 37. Accommodating a camera module 2 at an overpressure is beneficial for managing the entrance losses caused by the housing 1. The overpressure prevents ingress, of for instance moisture, that may cause entrance losses. The housing 1 may be filled with nitrogen gas for dispelling air, specifically the moisture content thereof, from the housing 1. The housing 1 is brought at an overpressure via valve 20, and may be maintained at an overpressure therewith during service life of the housing 1.

The second housing part 4 comprises a transparent portion 9, the second housing part 4 being moveable coupled with the first stationary housing part 3 for cleaning the transparent portion 9 of the second housing part 4. The transparent portion 9 is also referred to as entrance window 9. The transparent portion 9 is formed by the cylindrical tube 14 being partly or entirely transparent. The transparent portion 9 extends substantially parallel with respect to the aperture of the camera system 2. A cleaning device 18 is provided for cleaning the transparent portion 9 of the second housing part 4. Here the cleaning device 18 engages the exterior surface 22 of the cylindrical tube 14, however it is conceivable that a further cleaning device (not shown) engages the interior surface 23 of the cylindrical tube 14. The cleaning device 18 is provided with a brush 19 that extends along the exterior surface 22. The brush 19 engages the exterior surface 22 for cleaning the transparent portion 9 of the second housing part 4. When the second housing part 4 is rotating with respect to the first stationary housing part 3, the transparent portion 9 is cleaned. The cleaning device 18 may further comprise a wiper, spraying means and the like (all not shown).

The second housing part 4 being moveable with respect to the first stationary housing part 3 beneficially provides the ability to clean the transparent portion 9 while at the same time keeping the amount of layers between the camera module 2 and an object to be captured at a minimum. Entrance losses are minimized because there is just the transparent cylindrical tube wall 24 between the camera module 2 and the image to be captured. During life of the housing 1, entrance losses are kept at a minimum level by cleaning the exterior surface 22 of the cylindrical tube 14 and by the interior surface 23 being exposed to atmosphere in the interior of the housing 1 being nitrogen gas at an overpressure. In this connection entrance losses are the loss caused by the housing 1 in terms of light captured by the camera module 2.

A drive 7 is provided for rotating the second housing part 4 around the central axis 17 for cleaning the transparent portion 9 of the second housing part 4. The drive 7 is arranged with respect to the second housing part 4 by means of the mounting plate 11. The drive 7 comprises drive gear 25 for engaging the second housing part 4 for rotating said second housing part 4. The adjusting ring 5 of the second housing part 4 is provide with an inner toothing 26. The drive gear 25 engages with the inner toothing 26 for rotating the second housing part 4.

The bearing assembly 37 extends between the drive 7 and the camera system 2 accommodated in the housing 1. The camera system 2 extends along the central axis 17 from one side of the bearing assembly 37 and the drive 7 extends along the central axis 17 from the opposite side of the bearing assembly 37. The bearing assembly 37 separates the drive 7 from the camera system 2 accommodated in the housing 1. This prevents wear particles from the drive 7 form polluting the camera system 2.

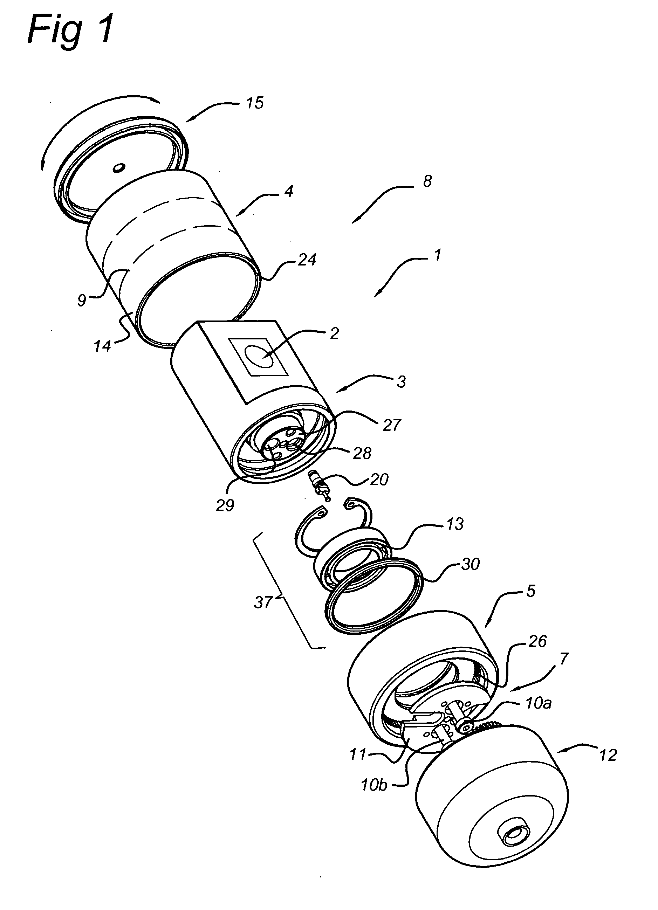

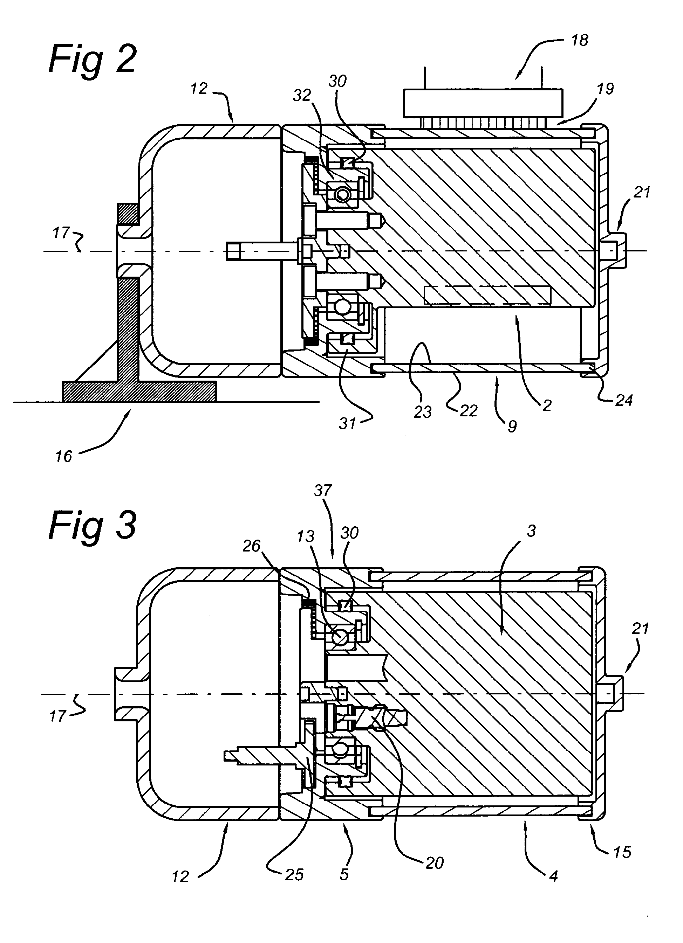

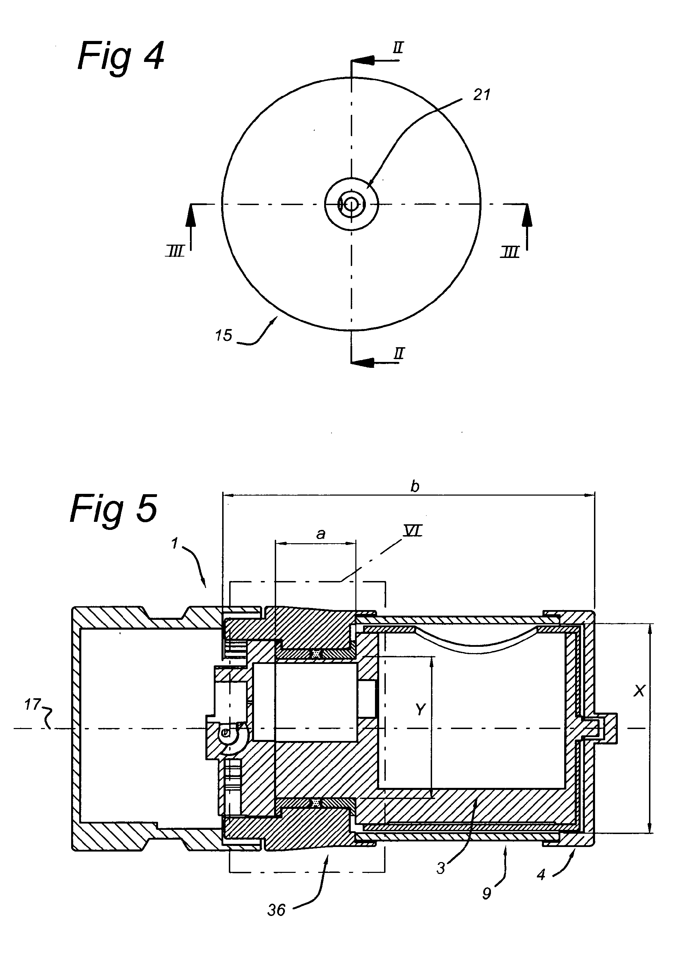

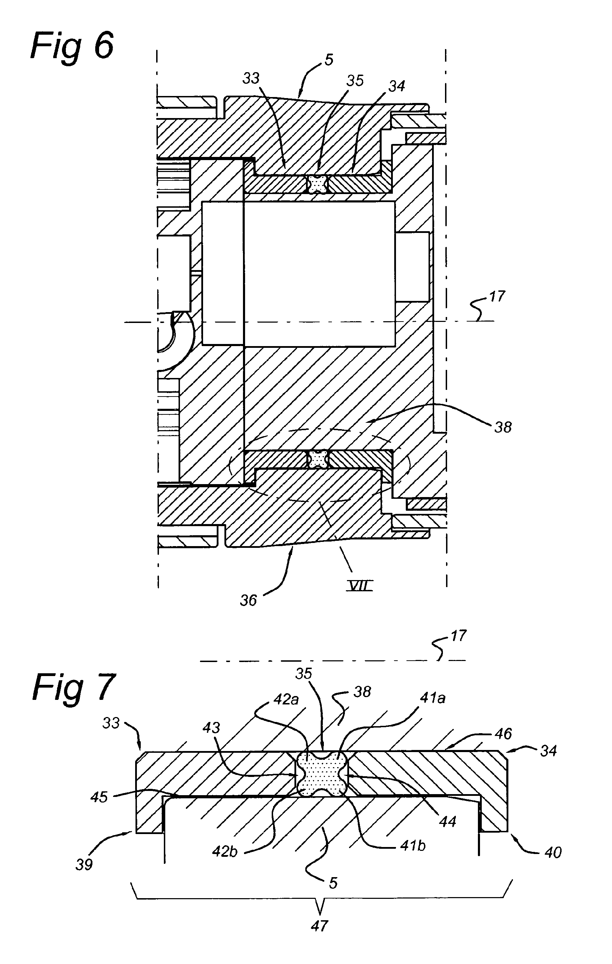

A further embodiment of the housing will be described referring to fig. 5-7. Mainly difference are described compared to the other embodiment of fig. 1-4.

The housing 1 comprises a bearing assembly 36 for gas tightly and moveably coupling the second housing part 4 with the first stationary housing part 3. The bearing assembly 36 comprises a slide bearing 47, also know as a sleeve bearing. The slide bearing 47 is gastight fit on the outer circumference 46 of stationary housing part member 38 and has a running fit with the inner circumference 45 of the adjusting ring 5 of the second housing part 4. It is conceivable that the slide bearing 47 has a running fit on the outer circumference 46 of stationary housing part member 38 and has a gastight fit with the inner circumference 45 of the adjusting ring 5. The slide bearing 47 comprises an upstream slide bearing bush 34 and a downstream slide bearing bush 33. Both the upstream slide bearing bush 34 and the downstream slide bearing bush 33, are each provided with a respective flange 39, 40 for arranging the bearing assembly 36 with respect to the housing 1.

The bearing assembly 36 extends over a bearing length a along the central axis 17. The second housing part 4 extends along a second housing part length b. Here, the ratio of b/a is about 4.5. This ratio in practice still provides stability for the second housing part 4 relative to the stationary housing part 3, and the required field of view for the camera system accommodated in the housing 1. The upstream slide bearing bush 34 and the downstream slide bearing bush 33 are spaced apart such that the slide bearing extends over a bearing length a along the central axis 17, providing an even better stability.

The bearing assembly 36 comprises a sealing means 35 for maintaining the housing 1 being gas filled at an overpressure. The sealing means 35 is provided between the upstream slide bearing bush 34 and the downstream slide bearing bush 33. This is beneficial since the bearing function of the bearing assembly 36 and the sealing function of the bearing assembly 36 are separated. In addition, the stability provided by the slide bearing, specifically the upstream slide bearing bush 34 and the downstream slide bearing bush 33, enables the sealing means 35 to seal the housing 1 even better. The respective end 44, 43 of the upstream slide bearing bush 34 and the downstream slide bearing bush 33 facing the sealing means 35, engages the sealing means 35 for arranging the sealing means 35 between the upstream slide bearing bush 34 and the downstream slide bearing bush 33. It is conceivable that the shape of the respective end 44, 43 mates with the sealing means 35.

The bearing assembly 36 has an inner diameter y. The transparent portion 9 has in inner diameter x. Here, the ratio x/y is about 1.5. This provides low friction of the bearing assembly 36 and minimal distortion caused by the curved transparent portion 9 with respect to images acquired by the camera system accommodated in the housing 1.

The sealing means 35 comprise a plurality of sealing lips 41a, 41b, 42a, 42b for even better sealing action of the sealing means 35. The sealing means is an x-type sealing ring, known per se. The upstream sealing lips 41a, 41b are pressed against respectively the outer circumference 46 of stationary housing part member 38 and the inner circumference 45 of the adjusting ring 5 by the pressure in the housing 1. This improves the sealing action of the sealing means 35 even more.

## Claims

1. Housing (1) for accommodating a vision system (2) therein, the housing (1) comprising
- a first stationary housing part (3),
- a second housing part (4) coupled with the first stationary housing part (3) for accommodating a vision system (2) in the housing (1),
and wherein the second housing part (4) comprises a transparent portion (9) and the second housing part (4) is moveable coupled with the first stationary housing part (3) for cleaning the transparent portion (9) of the second housing part (4), and wherein the second housing part (4) is gastight coupled with the first stationary housing part (3) for filling the housing (1) with gas, preferably for filling the housing (1) with gas at an overpressure.

2. Housing according to claim 1, wherein the second housing part (4) extends around the first stationary housing part (3).

3. Housing according to claim 2, wherein the second housing part (4) is provided with a curvature.

4. Housing according to claim 3, wherein the second housing part (4) extends circumferential around the first stationary housing part (3).

5. Housing according to a claim 2-4, wherein the transparent portion (9) extends circumferential around the first stationary housing part (3).

6. Housing according to a preceding claim, wherein the second housing part (4) is rotatable coupled with the first stationary housing part (3) for cleaning the transparent portion (9) of the second housing part (4).

7. Housing according to a preceding claim, comprising a cleaning device for cleaning the transparent portion (9) of the second housing part (4).

8. Housing according to a preceding claim, comprising a drive (7) for moving the second housing part (4) with respect to the first stationary housing part (3) for cleaning the transparent portion (9) of the second housing part (4).

9. Housing according to a preceding claim, comprising a filling device (20) for enabling filling the housing with gas.

10. Housing according to a preceding claim, comprising a heating device for preventing condensation on the transparent portion (9).

11. Assembly of a vision system (8) accommodated in a housing according to a preceding claim, comprising a camera system (2), and wherein the transparent portion (9) extends at the camera system (2) for constituting an entrance window (9) therefor.

12. Method for cleaning the entrance window (9) of an assembly according to a preceding claim, comprising the step;
- moving the second housing part (4) with respect to the first stationary housing part (3) for cleaning the entrance window (9) of the second housing part (4).

13. Method according to claim 12, comprising the step;
- rotating the second housing part (4) with respect to the first stationary housing part (3) for cleaning the entrance window (9) of the second housing part (4).

## Patentansprüche

1. Gehäuse (1) zum Aufnehmen eines Sichtsystems (2) in diesem, wobei das Gehäuse (1) umfasst:
- ein erstes stationäres Gehäuseteil (3),
- ein zweites Gehäuseteil (4), welches mit dem ersten stationären Gehäuseteil (3) zum Aufnehmen eines Sichtsystems (2) in dem Gehäuse (1) gekoppelt ist,
und wobei das zweite Gehäuseteil (4) einen durchsichtigen Teil (9) umfasst und das zweite Gehäuseteil (4) mit dem ersten stationärem Gehäuseteil (3) zum Reinigen des durchsichtigen Teils (9) des zweiten Gehäuseteils (4) bewegbar gekoppelt ist, und wobei das zweite Gehäuseteil (4) gasdicht mit dem ersten stationären Gehäuseteil (3) zum Füllen des Gehäuses (1) mit Gas, bevorzugt zum Füllen des Gehäuses (1) mit Gas bei einem Überdruck gekoppelt ist.

2. Gehäuse nach Anspruch 1, wobei sich das zweite Gehäuseteil (4) um das erste stationäre Gehäuseteil (3) herum erstreckt.

3. Gehäuse nach Anspruch 2, wobei das zweite Gehäuseteil (4) mit einer Krümmung versehen ist.

4. Gehäuse nach Anspruch 3, wobei sich das zweite Gehäuseteil (4) umfänglich um das erste stationäre Gehäuseteil (3) herum erstreckt.

5. Gehäuse nach einem Anspruch 2 bis 4, wobei sich der durchsichtige Teil (9) umfänglich um das erste stationäre Gehäuseteil (3) herum erstreckt.

6. Gehäuse nach einem vorstehenden Anspruch, wobei das zweite Gehäuseteil (4) drehbar mit dem ersten stationären Gehäuseteil (3) zum Reinigen des durchsichtigen Teils (9) des zweiten Gehäuseteils (4) gekoppelt ist.

7. Gehäuse nach einem vorstehenden Anspruch, welches ein Reinigungsgerät zum Reinigen des durchsichtigen Teils (9) des zweiten Gehäuseteils (4) umfasst.

8. Gehäuse nach einem vorstehenden Anspruch, welches einen Antrieb (7) zum Bewegen des zweiten Gehäuseteils (4) in Bezug zu dem ersten stationären Gehäuseteil (3) zum Reinigen des durchsichtigen Teils (9) des zweiten Gehäuseteils (4) umfasst.

9. Gehäuse nach einem vorstehenden Anspruch, welches ein Füllgerät (20) zum Ermöglichen eines Füllens des Gehäuses mit Gas umfasst.

10. Gehäuse nach einem vorstehenden Anspruch, welches ein Wärmegerät zum Verhindern einer Kondensation auf dem durchsichtigen Teil (9) umfasst.

11. Anordnung eines Sichtsystems (8), welches in einem Gehäuse nach einem vorstehenden Anspruch aufgenommen ist, welches ein Kamerasystem (2) umfasst, und wobei sich der durchsichtige Teil (9) an dem Kamerasystem (2) zum Bilden eines Eingangsfensters (9) für dieses erstreckt.

12. Verfahren zum Reinigen des Eingangsfensters (9) einer Anordnung nach einem vorstehenden Anspruch, umfassend den Schritt;
- Bewegen des zweiten Gehäuseteils (4) in Bezug zu dem ersten stationären Gehäuseteil (3) zum Reinigen des Eingangsfensters (9) des zweiten Gehäuseteils (4).

13. Verfahren nach Anspruch 12, umfassend den Schritt;
- Drehen des zweiten Gehäuseteils (4) in Bezug zu dem ersten stationären Gehäuseteil (3) zum Reinigen des Eingangsfensters (9) des zweiten Gehäuseteils (4).

## Revendications

1. Boitier (1) destiné à recevoir un système de vision (2), ce boitier (1) comprenant :
- une première partie de boitier fixe (3),
- une seconde partie de boitier (4) associée à la première partie de boitier fixe (3) pour permettre la réception d'un système de vision (2) dans le boitier (1),
dans lequel la seconde partie de boitier (4) comprenant une partie transparente (9) et pouvant être déplacée en association avec la première partie de boitier fixe (3) pour nettoyer cette partie transparente (9) de la seconde partie de boitier (4), et dans lequel la seconde partie de boitier (4) étant associée à la première partie de boitier fixe (3) de façon étanche aux gaz pour permettre de remplir le boitier (1) avec un gaz, de préférence pour permettre de remplir le boitier (1) avec un gaz sous pression.

2. Boitier conforme à la revendication 1, dans lequel la seconde partie de boitier (4) s'étend autour de la première partie de boitier fixe (3).

3. Boitier conforme à la revendication 2, dans lequel la seconde partie de boitier (4) comporte une courbure.

4. Boitier conforme à la revendication 3, dans lequel la seconde partie de boitier (4) s'étend autour de la périphérie de la première partie de boitier fixe (3).

5. Boitier conforme à l'une des revendications 2-4, dans lequel la partie transparente (9) s'étend autour de la périphérie de la première partie de boitier fixe (3).

6. Boitier conforme à l'une des revendications précédentes, dans lequel la seconde partie de boitier (4) est associée à la première partie de boitier fixe (3) en étant mobile en rotation pour permettre de nettoyer la partie transparente (9) de la seconde partie de boitier (4).

7. Boitier conforme à l'une des revendications précédentes, comprenant un dispositif de nettoyage pour permettre de nettoyer la partie transparente (9) de la seconde partie de boitier (4).

8. Boitier conforme à l'une des revendications précédentes, comprenant une commande (7) pour permettre de déplacer la seconde partie de boitier (4) par rapport à la première partie de boitier fixe (3) pour permettre de nettoyer la partie transparente (9).

9. Boitier conforme à l'une des revendications précédentes, comprenant un dispositif de remplissage (20) pour permettre de remplir le boitier avec du gaz.

10. Boitier conforme à l'une des revendications précédentes, comprenant un dispositif de chauffage pour éviter la condensation sur la partie transparente (9).

11. Ensemble de système de vision (8) logé dans un boitier conforme à l'une des revendications précédentes comprenant un système de caméra (2), la partie transparente (9) s'étendant au niveau du système de caméra (2) pour former une fenêtre d'entrée (9).

12. Procédé de nettoyage d'une fenêtre d'entrée (9) d'un ensemble conforme à la revendication précédente comprenant une étape consistant à déplacer la seconde partie de boitier (4) par rapport à la première partie de boitier fixe (3) pour permettre de nettoyer la fenêtre d'entrée (9) de la seconde partie de boitier (4).

13. Procédé conforme à la revendication 12, comprenant une étape consistant à faire tourner la seconde partie de boitier (4) par rapport à la première partie de boitier fixe (3) pour nettoyer la fenêtre d'entrée (9) de la seconde partie de boitier (4).
